# FASCICULE DE BREVET EUROPEEN

(11) **EP 0 402 241 B1**
(45) Date de publication et mention de la délivrance du brevet: **03.02.1993**
(21) Numéro de dépôt: 90401526.0
(22) Date de dépôt: 06.06.1990
(51) Int. Cl.: F16B 7/16

(54) **Dispositif pour empêcher un tube mâle prévu coulissant dans un tube femelle de se déboîter, et étai muni dudit dispositif**
Vorrichtung zum Verhindern des sich Lösens eines verschiebbar in einem aufnehmenden Rohr sitzenden einschiebbaren Rohrs und eine mit dieser Vorrichtung versehene Stütze
Device for preventing the disconnection of a male pipe being movable in a female pipe and a strut having this device

(30) Priorité: 06.06.1989 FR 8907472
(43) Date de publication de la demande: 12.12.1990
(73) Titulaire: RETOTUB SOCIETE ANONYME, F-18105 Vierzon Cédex (FR)
(72) Inventeur: Rethore, Philippe, F-18100 Vierzon (FR); Penin, Michel, F-13880 Velaux (FR)
(74) Mandataire: Hasenrader, Hubert

(56) Documents cités:
- DE-A- 2 143 700
- DE-C- 586 113
- FR-A- 2 488 057
- FR-A- 2 497 886

## Description

La présente invention concerne un dispositif pour empêcher un tube mâle prévu coulissant dans un tube femelle de se déboîter, ledit tube mâle ayant une partie d'extrémité logeant dans le tube femelle et un diamètre extérieur inférieur au diamètre intérieur du tube femelle et ledit tube femelle étant muni à l'une de ses extrémités d'une bague ayant un diamètre intérieur inférieur au diamètre intérieur du tube femelle et dans laquelle coulisse le tube mâle, et du type comportant des moyens d'arrêt portés par la partie d'extrémité du tube mâle logeant dans le tube femelle et susceptibles de coopérer avec ladite bague pour empêcher le déboîtement du tube mâle.

De tels assemblages de tubes (voir par example FR-A-2 488 057) sont d'un emploi courant, notamment dans les étais. Dans certains types d'assemblage, le tube mâle peut sortir du tube femelle et dans d'autres types le tube mâle comporte dans sa partie d'extrémité logeant dans le tube femelle, des moyens d'arrêt empêchant le déboîtement du tube mâle. Ces moyens d'arrêt peuvent être formés par un évasement de l'extrémité correspondante du tube mâle (voir par example DE-C-586 113) ou par des tétons prévus sur la paroi externe du tube mâle. Ces tétons peuvent être formés par les extrémités de deux pièces coulissant l'une dans l'autre avec interposition éventuelle d'un ressort et disposés transversalement, lors de la construction de l'assemblage dans la partie d'extrémité du tube mâle, celui-ci comportant dans sa paroi des alésages prévus en correspondance pour le passage desdites extrémités.

Ces moyens d'arrêt empêchent le tube mâle de se déboîter, mais ils ont l'inconvénient d'être difficiles et coûteux à réaliser, et surtout d'être non démontables, ce qui entraîne des difficultés pour l'entretien de ces assemblages de tubes, entretien pourtant nécessaire lorsque ces assemblages sont utilisés dans des milieux poussiéreux tels que les chantiers.

Le but de la présente invention est de proposer un dispositif tel que mentionné ci-dessus qui pallie ces inconvénients.

Le but est atteint selon l'invention par le fait que les moyens d'arrêt sont constitués par une tige ayant une longueur supérieure au diamètre intérieur de ladite bague et disposée transversalement dans deux lumières ménagées en vis-à-vis dans la paroi de la partie d'extrémité du tube mâle logeant dans le tube femelle, et par le fait qu'une ouverture de passage, destinée à permettre la mise en place ou l'extraction de ladite tige, est prévue dans la paroi du tube femelle.

Grâce à cette structure, la tige est susceptible de buter contre la bague empêchant ainsi le tube mâle de sortir du tube femelle. De plus le montage de l'assemblage du tube est aisé, il suffit d'introduire la partie d'extrémité du tube mâle par l'alésage de la bague et de mettre les lumières du tube mâle et l'ouverture de passage du tube femelle en alignement pour introduire la tige. Le démontage de l'assemblage de tubes se réalise en mettant la tige en face de l'ouverture de passage.

Pour faciliter l'extraction de la tige, il est avantageux de prévoir une deuxième ouverture dans la paroi du tube femelle disposée en vis-à-vis de ladite ouverture de passage. La tige peut ainsi être chassée à l'aide d'un chasse-goupille.

La présente invention concerne également un étai comportant un tube mâle monté coulissant dans un tube femelle et des moyens de réglage et de blocage du type mâle par rapport au tube femelle et qui comporte en outre le dispositif selon l'invention.

De façon connue la paroi externe de la bague comporte un filetage ayant un diamètre supérieur au diamètre extérieur du tube femelle et les moyens de réglage et de blocage comportent un manchon ou écrou fileté s'adaptant sur le filetage de la bague.

Avantageusement le manchon ou l'écrou taraudé obture au moins en partie l'ouverture de passage de la tige.

Avantageusement le manchon ou l'écrou taraudé est muni d'une vis de butée destinée à empêcher le manchon de se déboîter de la bague.

De préférence la vis de butée est démontable.

L'ouverture de passage de la tige est ainsi obturée au moins en partie par le manchon ou écrou taraudé. Ceci évite aux poussières de pénétrer dans le tube femelle et surtout empêche la tige de s'échapper de l'étai soit accidentellement soit volontairement. La présence de la vis de butée démontable permet aux personnes qualifiées de démonter le manchon, d'extraire la tige et le tube mâle pour l'entretien de l'étai.

Les différents avantages et caractéristiques de l'invention ressortiront à la lecture de la description faite ci-après à titre d'exemple et en référence au dessin annexé dans lequel :
La figure 1 est une coupe longitudinale d'un assemblage de tubes muni du dispositif selon l'invention,
La figure 2 représente le même assemblage de tubes, les tubes étant en extension maximum,
La figure 3, est une coupe verticale d'un étai conforme à l'invention, et
La figure 4 est une coupe d'un étai selon un deuxième mode de réalisation.

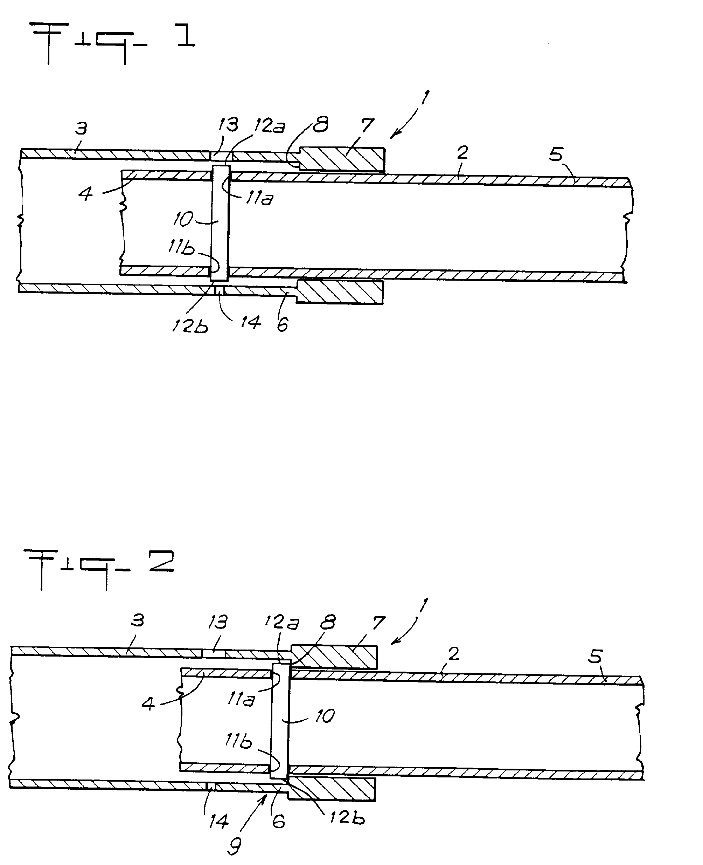

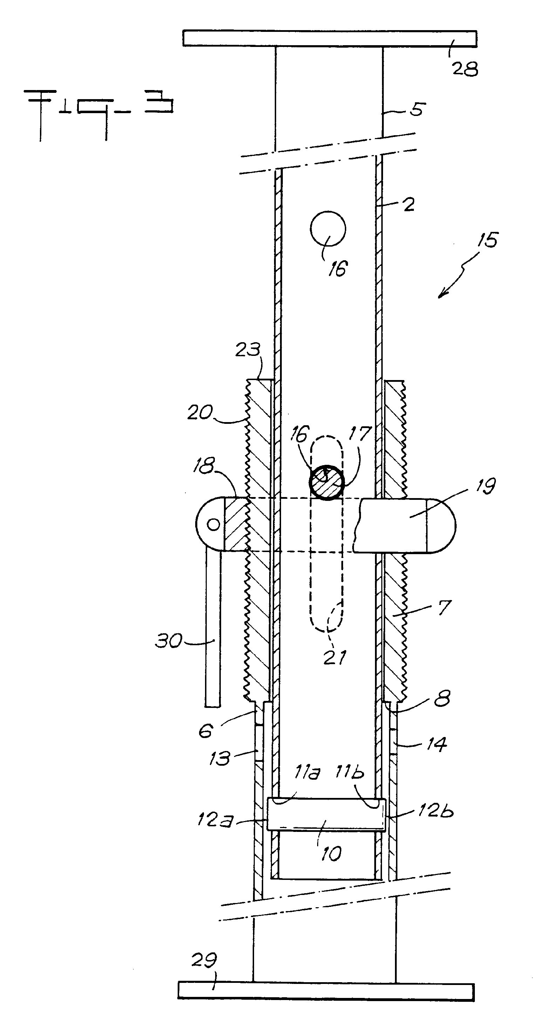

Les figures 1 et 2 montrent un exemple de réalisation d'un assemblage de tubes 1 comportant un tube mâle 2 coulissant dans un tube femelle 3. Le tube mâle 2 a une première partie d'extrémité 4 logeant dans le tube femelle 3 et son diamètre extérieur est inférieur au diamètre intérieur du tube femelle 3. La deuxième partie d'extrémité 5 du tube mâle 2 est située à l'extérieur du tube femelle 3 et dans le prolongement coaxial de celui-ci. Le tube femelle 3 est muni à l'une de ses extrémités 6, voisine de la partie médiane du tube mâle 2, d'une bague 7 dans laquelle coulisse le tube mâle 2 et dont le diamètre intérieur est inférieur au diamètre intérieur du tube femelle 3 et égal ou légèrement supérieur au diamètre extérieur du tube mâle 3. La bague 7 présente ainsi un épaulement 8 situé à l'intérieur du tube femelle 3.

La première partie d'extrémité 4 du tube mâle 2 comporte des moyens d'arrêt 9 susceptibles à venir en appui contre l'épaulement 8 de la bague 7 pour empêcher le tube mâle 2 de sortir complètement du tube femelle 3 par l'alésage de la bague 7.

Selon l'invention, les moyens d'arrêt 9 sont constitués par une tube ou rond 10 ayant une longueur supérieure au diamètre intérieur de la bague 7 et égale ou légèrement inférieure au diamètre intérieur du tube femelle 3. Le tube mâle 2 comporte deux lumières 11a, 11b diamètralement opposées, prévues dans sa paroi, dans lesquelles est disposée la tige 10. Les extrémités 12a et 12b de la tige 10 se trouvent ainsi en dehors du tube mâle 2 et en contact, ou du moins au voisinage immédiat de la face interne du tube femelle 3, et ils jouent le rôle de tétons susceptibles de venir buter contre l'épaulement 8 de la bague 7.

La tige 10 présente une section homogène de forme quelconque, soit ronde soit rectangulaire, et la section des lumières 11a et 11b est adaptée à la section de la tige 10 de telle manière que la tige 10 ait un certain jeu par rapport à ces lumières 11a et 11b tout en y restant prisonnière.

Le tube femelle 3 présente dans sa paroi une ouverture 13 ayant une section au moins égale à la section des lumières 11a et 11b, destinée à permettre le passage de la tige 10. L'ouverture 13 est située de préférence au voisinage de la bague 7 et au moins à un endroit tel que la deuxième partie d'extrémité 5 du tube mâle 2 soit à l'extérieur du tube femelle 3 lorsque les lumières 11a et 11b sont alignées avec l'ouverture de passage 13.

Grâce à cette structure, la mise en place de la tige 10 se fait en mettant les lumières 11a et 11b en alignement avec l'ouverture de passage 13 (figure 1) et en glissant la tige 10 par l'ouverture de passage 13. Pour extraire la tige 10, il suffit inversement de mettre une extrémité 12a ou 12b de la tige 10 en regard de l'ouverture de passage 13.

Pour faciliter cette extraction, une deuxième ouverture 14 peut être prévue dans la paroi du tube femelle 3 en vis-à-vis de l'ouverture de passage 13, de telle manière que les lumières 11a et 11b et les ouvertures 13 et 14 puissent être alignées (figure 1). La deuxième ouverture 14 peut avoir une section inférieure à la section de la tige 10 et sert à chasser la tige 10 à l'aide d'un clou ou d'un chasse-goupille.

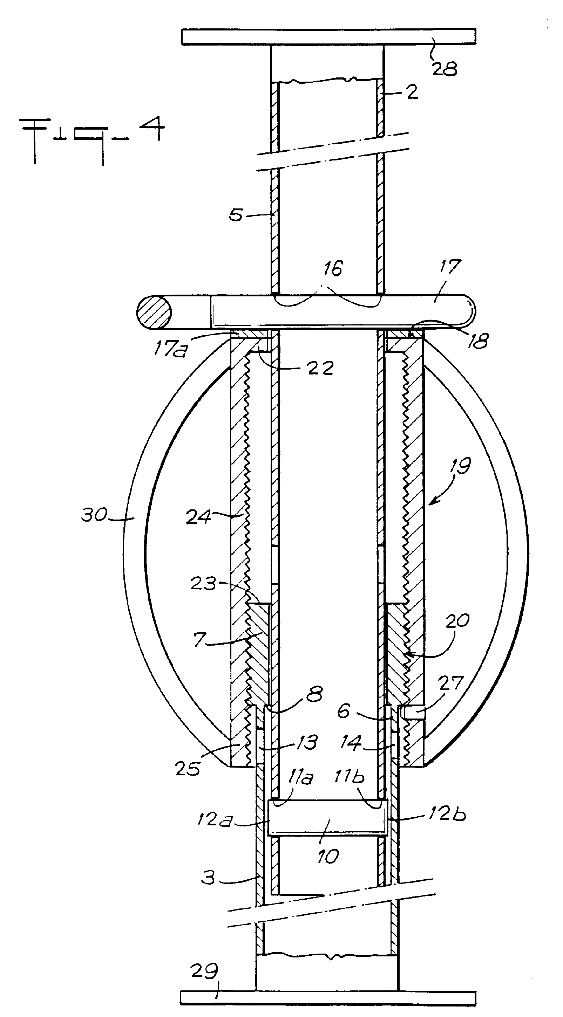

Les figures 3 et 4 montrent plusieurs réalisations d'étais constitués par un assemblage de tubes 1 conforme à la description faite ci-dessus. Dans ces figures les éléments répertoriés ci-dessus portent les mêmes références.

L'étai 15 comporte un tube mâle 2, dit coulisse, coulissant dans un tube femelle 3, dit fût, muni à son extrémité supérieure 6 d'une bague 7 dans laquelle coulisse le tube mâle 2. Le tube mâle 2 comporte des lumières 11a et 11b dans lesquelles est disposée une tige 10 dont les extrémités 12a et 12b sont susceptibles de buter contre l'épaulement 8 de la tige 7. Le diamètre intérieur de la bague 7 est inférieur au diamètre intérieur du tube femelle 3 et égal ou supérieur au diamètre extérieur du tube mâle 2.

Le tube femelle 3 comporte au moins dans sa partie d'extrémité supérieure une pluralité de paires de trous 16 régulièrement espacés, les trous 16 d'une paire étant diamètralement opposés et prévus pour recevoir une broche 17 destinée à venir en appui contre la face supérieure 18 d'un manchon ou écrou taraudé 19 coopérant avec un filetage 20 prévu sur la face externe de la bague 7. Une rondelle 17a peut être interposée entre la broche 17 et le manchon ou écrou 19.

Selon un mode de réalisation présenté sur la figure 3, le manchon 19 a une hauteur inférieure à la hauteur de la bague 7 et le filetage 20 est partiellement apparent. Dans ce mode de réalisation la bague 7 comporte deux lumières oblongues 21 verticales et diamétralement opposées dans lesquelles coulisse la broche 17. Les ouvertures 13 et 14 sont également apparentes, et le déplacement vertical du manchon 19 peut être limité par des vis de butée, non représentées sur la figure 3, portées par la bague 7.

Selon le mode de réalisation présenté sur la figure 4, la bague 7 présente un filetage 20 dont le diamètre est supérieur au diamètre extérieur du tube femelle 3, et le manchon ou écrou taraudé 19 présente une paroi supérieure 22 qui recouvre la face supérieure 23 de la bague 7 et une jupe taraudée 24 dont la hauteur est supérieure à la hauteur de la bague 7 de telle manière que la partie inférieure 25 de la jupe 7 entoure la portion d'extrémité du tube femelle 3 voisine de la bague 7. Une vis de butée 27 démontable est fixée sur la partie inférieure 25 de la jupe 24. Cette vis de butée 27 est susceptible de venir en appui contre la face externe inférieure de la bague 7 et limiter le déplacement vers le haut du manchon 19.

Le déplacement vertical relatif du manchon 19 par rapport à l'étai 15 est égal à l'écart entre la distance séparant la vis de butée 27 et la paroi supérieure 22 du manchon 19, et la hauteur de la bague 7. La hauteur du manchon 19 est calculée pour que cet écart soit voisin de la distance séparant deux couples de trous 16 adjacents de manière à pouvoir régler l'étai 15 à la hauteur souhaitée.

L'ouverture de passage 13 de la tige 10 et la deuxième ouverture 14 diamétralement opposée sont situées au voisinage de la bague 7 de manière à ce qu'elles soient obturées par la partie inférieure 25 de la jupe 24 quel que soit le réglage du manchon ou écrou taraudé 19.

Une platine 28 est fixée à l'extrémité supérieure du tube mâle 3, et une semelle 29 est prévue, à l'extrémité inférieure du tube femelle 2. Le manchon ou écrou taraudé 19 comporte également des poignées 30 destinées à faciliter son vissage.

## Revendications

1. Dispositif pour empêcher un tube mâle (2) prévu coulissant dans un tube femelle (3) de se déboîter, ledit tube mâle (2) ayant une partie d'extrémité (4) logeant dans le tube femelle (3) et un diamètre extérieur inférieur au diamètre intérieur du tube femelle (3) et ledit tube femelle (3) étant muni à l'une de ses extrémités (6) d'une bague (7) ayant un diamètre intérieur inférieur au diamètre intérieur du tube femelle (3) et dans laquelle coulisse le tube mâle (2), et du type comportant des moyens d'arrêt (9) portés par la partie d'extrémité (4) du tube mâle (2) logeant dans le tube femelle (3) et susceptibles de coopérer avec ladite bague (7) pour empêcher le déboîtement du tube mâle (2), caractérisé en ce que les moyens d'arrêt (9) sont constitués par une tige (10) ayant une longueur supérieure au diamètre intérieur de ladite bague (7) et disposée transversalement dans deux lumières (11a, 11b) ménagées en vis-à-vis dans la paroi de la partie d'extrémité (4) du tube mâle (2) logeant dans le tube femelle (3), et en ce qu'une ouverture de passage (13), destinée à permettre la mise en place ou l'extraction de ladite tige (10), est prévue dans la paroi du tube femelle (3).

2. Dispositif selon la revendication 1 caractérisé en ce qu'il est prévu dans la paroi du tube femelle (3) une deuxième ouverture (14) disposée en vis-à-vis de ladite ouverture de passage (13).

3. Etai comportant un tube mâle (2) monté coulissant dans un tube femelle (3) et des moyens de réglage et de blocage du tube mâle (2) par rapport au tube femelle (3) caractérisé en ce qu'il comporte en outre le dispositif selon la revendication 1.

4. Etai selon la revendication 3 caractérisé en ce que le tube femelle (3) comporte dans sa paroi une deuxième ouverture (14) disposée en vis-à-vis de l'ouverture de passage (13) de la tige (10).

5. Etai selon l'une quelconque des revendications 3 et 4 dans lequel la paroi externe de la bague (7) comporte un filetage (20) ayant un diamètre supérieur au diamètre extérieur du tube femelle (3) et dans lequel les moyens de réglage et de blocage comportent un manchon ou écrou taraudé (19) s'adaptant sur le filetage (20) de la bague (7), caractérisé en ce que le manchon ou écrou taraudé (19) obture au moins en partie l'ouverture de passage (13) de la tige (10).

6. Etai selon la revendication 5 caractérisé en ce que le manchon ou écrou taraudé (19) est muni d'une vis de butée (27) destinée à empêcher ledit manchon (19) de se déboîter de la bague (7).

7. Etai selon la revendication 6 caractérisé en ce que la vis de butée (27) est démontable.

## Patentansprüche

1. Vorrichtung zum Verhindern des Sich-Lösens eines in einem Aufnahmerohr (3) gleitend vorgesehenen Einschubrohrs (2), wobei das genannte Einschubrohr (2) einen Endabschnitt (4) aufweist, der in dem Aufnahmerohr (3) sitzt, sowie einen Außendurchmesser, der kleiner ist als der Innendurchmesser des Aufnahmerohrs (3), und wobei das genannte Aufnahmerohr (3) an einem seiner Enden (6) mit einem Ring (7) versehen ist, dessen Innendurchmesser kleiner ist als der Innendurchmesser des Aufnahmerohrs (3) und in dem das Einschubrohr (2) gleitet, die Sperrmittel (9) enthält, die auf dem Endabschnitt (4) des in dem Aufnahmerohr (3) gelagerten Einschubrohrs (2) sitzen und geeignet sind, mit dem genannten Ring (7) zusammenzuwirken, um das Sich-Lösen des Einschubrohrs (2) zu verhindern,
dadurch gekennzeichnet, daß die Sperrmittel (9) von einer Stange (10) gebildet werden, deren Länge größer ist als der Innendurchmesser des genannten Rings (7) und die quer in zwei Schlitzlöchern (11a, 11b) angeordnet ist, die einander gegenüber in der Wand des Endabschnitts (4) des in dem Aufnahmerohr (3) gelagerten Einschubrohrs (2) angebracht sind, und daß eine Durchgangsöffnung (13) in der Wand des Aufnahmerohrs (3) vorgesehen ist, die das Einsetzen bzw. Herausziehen der genannten Stange (10) ermöglichen soll.

2. Vorrichtung nach Anspruch 1,
dadurch gekennzeichnet, daß in der Wand des Aufnahmerohrs (3) eine zweite Öffnung (14) vorgesehen ist, die gegenüber der genannten Durchgangsöffnung (13) angeordnet ist.

3. Stütze, bestehend aus einem Einschubrohr (2), das in einem Aufnahmerohr (3) gleitend eingebaut ist, und Mitteln zum Einstellen und Feststellen des Einschubrohrs (2) in dem Aufnahmerohr (3),
dadurch gekennzeichnet, daß sie des weiteren die Vorrichtung gemäß Anspruch 1 enthält.

4. Stütze nach Anspruch 3,
dadurch gekennzeichnet, daß das Aufnahmerohr (3) in seiner Wand eine zweite Öffnung (14) aufweist, die gegenüber der Durchgangsöffnung (13) der Stange (10) angeordnet ist.

5. Stütze nach einem der Ansprüche 3 und 4, bei der die Außenwand des Rings (7) ein Gewinde (20) aufweist, dessen Durchmesser größer ist als der Außendurchmesser des Aufnahmerohrs (3), und bei der die Einstell- und Feststellmittel aus einer Gewindemuffe oder -mutter (19) bestehen, die sich an das Gewinde (20) des Rings (7) anpaßt,
dadurch gekennzeichnet, daß die Gewindemuffe oder -mutter (19) wenigstens zum Teil die durchgehende Öffnung (13) der Stange (10) abdeckt.

6. Stütze nach Anspruch 5,
dadurch gekennzeichnet, daß die Gewindemuffe oder -mutter (19) mit einer Anschlagschraube (27) versehen ist, die verhindern soll, daß die genannte Muffe (19) sich von dem Ring (7) löst.

7. Stütze nach Anspruch 6,
dadurch gekennzeichnet, daß die Anschlagschraube (27) entfernt werden kann.

## Claims

1. Device for preventing a male tube (2) which is slidably mounted inside a female tube (3) from being disconnected, said male tube (2) having an end portion (4) housed inside the female tube (3) and an outside diameter which is smaller than the inside diameter of the female tube (3) and said female tube (3) being provided at one of its ends (6) with a ring (7) whose inside diameter is smaller than the inside diameter of the female tube (3) and inside which the male tube (2) slides, and of the type comprising stop means (9) carried by the end portion (4) of the male tube (2) housed inside the female tube (3) and adapted to cooperate with said ring (7) so as to prevent said male tube (2) from being disconnected, characterized in that the stop means (9) consist in a rod (10) whose length is greater than the inside diameter of said ring (7) and which is transversely disposed inside two slots (11a, 11b) in facing relationship in the wall of the end portion (4) of the male tube (2) housed inside the female tube (3), and in that a passage opening (13), intended for the mounting or dismounting of said rod (10), is provided inside the wall of the female tube (3).

2. Device according to claim 1, characterized in that a second opening (14) is provided inside the wall of the female tube (3) which is disposed in facing relationship to said passage opening (13).

3. Prop comprising a male tube (2) which is slidably mounted inside a female tube (3) and means for adjusting and locking the male tube (2) relative to the female tube (3), characterized in that it further comprises the device according to claim 1.

4. Prop according to claim 3, characterized in that the female tube (3) comprises a second opening (14) disposed in facing relationship to the passage opening (13) of the rod (10) inside its wall.

5. Prop according to any one of claims 3 and 4, in which the outer wall of the ring (7) comprises a thread (20) whose diameter is greater than the outside diameter of the female tube (3) and in which the adjustment and locking means comprise a threaded socket or nut (19) adapted to be fitted on the thread (20) of the ring (7), characterized in that the threaded socket or nut (19) obturates at least partly the passage opening (13) of the rod (10).

6. Prop according to claim 5, characterized in that the threaded socket or nut (19) is provided with a stop screw (27) adapted to prevent said socket (19) from being disconnected from the ring (7).

7. Prop according to claim 6, characterized in that the stop screw (27) is dismountable.
